# EUROPEAN PATENT APPLICATION

(11) **EP 2 372 575 A1**
(43) Date of publication of application: **05.10.2011**
(21) Application number: 10250610.2
(22) Date of filing: 26.03.2010
(51) Int. Cl.: G06F 17/30, G06F 21/00

(54) **Information retrieval with security rules**

(71) Applicant: British Telecommunications public limited company, London EC1A 7AJ (GB)
(72) Inventor: The designation of the inventor has not yet been filed
(74) Representative: Roberts, Simon Christopher

(57) **Abstract**

An information retrieval method comprises receiving (405) a user query intended to retrieve information from one or more information sources, comparing the received query to a stored query history, in order to determine whether the received query is related to any previously received queries (415), identifying a security rule that is associated with a query combination comprising the received query and any related previously received queries; and, in advance of processing the received query, applying the security rule to determine whether the user is entitled to retrieve information that would be generated by processing the received query (430).

## Description

### Technical field

The present invention relates to information retrieval, and particularly, but not exclusively, to information retrieval applied by data integration systems and the like.

### Background

The term "information" as used herein has a broad meaning and includes structured and unstructured information and data; and the terms information and data may be used interchangeably.

Any breach of information security, whether by accident or through malicious intent, is a serious matter for organisations. Accordingly, many information security measures are known and employed.

For example, it is known to apply access controls to systems and sensitivity labels to information, and especially sensitive information, stored in information repositories such as databases. Of course, other kinds of information security are known, such as encryption to protect information even if it can be accessed by unauthorised people.

Access controls typically provide a means to control access to databases, for example, by using passwords, biometrics or smartcards (or a combination thereof). In the field of trusted computing, operating systems may employ so-called mandatory access controls, which constrain people (and processes) from performing certain operations on target data, and such techniques can be applied to database management.

Sensitivity labels that are applied to stored information typically indicate who can access the information, whether the access is for reading or writing (or both), and who that information can be passed to. Sensitivity labels are often used with mandatory access controls.

While access controls and sensitivity labels can provide an extremely controlled information security regime, applying sensitivity labels to huge volumes of information is time consuming and impractical, and the challenge increases as information becomes more and more federated across different systems, which may be managed by different people and organisations.

'Data integration systems', or 'virtual data integration systems' as they are sometimes referred to, typically provide users with a model, also known as a unified view, of information that is, in fact, stored in plural different underlying information sources. Data integration systems, in effect, hide an underlying information source structure from a user, and enable the user to issue queries over unified views. These queries are then broken down by the data integration system into sub queries that can be processed by the individual information sources. The information returned by the information sources is then combined or joined by the data integration system and presented to the user who issued the query.

The term 'data integration system', as employed herein, is intended to encompass any system that provides a single query interface covering plural information sources, including various kinds of federated databases, data warehouses and virtual data storage systems.

A unified view may be provided in different ways. For example, it is known to provide a unified view by way of an ontology, which is a formal representation of knowledge by a set of concepts within a domain covering all of the associated information sources. Another known form of unified view is a unified schema. In any case, a unified view is typically designed with the users of the systems in mind rather than the underlying information sources, with wrappers or converters being provided to convert a user query generated through the unified view into queries suitable for the underlying information sources.

An advantage of such a system is that new information sources can be added to the system simply by generating suitable wrapper or converters.

Data integration systems often operate across a number of heterogeneous information sources. An information source in this context is typically a relational database, but can be any other kind of data or information repository, such as text files, XML files and spreadsheets, which store information that can be queried and accessed. The information is typically accessed using one or more standard query languages such as SQL, forms and APIs by means of connection standards such as ODBC, JDBC, OLE DB, to name a few, or sometimes bespoke APIs. The query languages and APIs define standard data structure definitions that enable compliant systems to interact with one another and pass data back and forth.

So-called enterprise information integration (EII) systems represent the application of data integration systems to information sources within an organisation.

One known data integration system is described in "A Data Integration Broker for Healthcare Systems"; IEEE, Computer, April 2007, pp. 34-41; David Budgen, Michael Rigby, Pearl Brereton, Mark Turner. The system is said to be a prototype information broker that uses a software service model to collect and integrate diverse patient data from autonomous healthcare agencies, potentially solving many problems that challenge current enterprise-based file systems.

While applying access controls to this kind of system is important to preserve patient confidentiality, it is difficult to apply sensitivity labels to all of the disparate kinds of information, bearing in mind also the large number of diverse classes of people, including administrators, general practitioners, clinicians, nurses, pharmacists and researchers, who may need immediate access to the information in one form or another. Similar issues potentially arise in other large federated systems, such as criminal justice systems, social security systems, immigration systems, banking systems, insurance systems, and the like.

All such systems contain extremely sensitive information, which may be distributed across many disparate information sources.

Information security can be increased by filtering the information to detect sensitive information. Tools and techniques are known for scanning information sources in order to find and classify sensitive information. These include:
Spider (http://www.cit.cornell.edu/security/tools/) - a tool for finding sensitive data, also allows use of custom searches through the use of regular expressions.
Senf (http://senf.security.utexas.edu/wiki/) - a Java tool from the University of Texas designed to look for Social Security Numbers and Credit Cards.
PowerGREP (http://www.powergrep.com/) - a commercial application that can be used for finding sensitive data, through the use of regular expressions.
Identity Finder (http://identiftyfinder.com/) - a commercial application that can be used to find sensitive data, as well as providing other functions such as file encryption.

Such tools can be employed to scan information-at-rest (i.e. stored information) or information-in-motion (i.e. information as it moves from one place to another, for example, in response to a query). Accordingly, it is possible to detect potentially malicious information accesses using these kinds of tools.

Once sensitive information has been detected using one of these tools, it can be classified so that it is not generally accessible (if it is information-at-rest) or prevented from being delivered to a requestor (if it is information-in-motion). Aspects and embodiments of the present invention aim to provide improved or at least alternative solutions to information security in data integration systems.

### Summary

Aspects and embodiments of the present invention relate to systems and methods for retrieving information.

According to a first aspect, an embodiment of the invention provides a computer implemented information retrieval method, comprising: receiving a user query intended to retrieve information from one or more information sources; comparing the received query to a stored query history of previously received queries, in order to determine whether the received query is related to any previously received queries; identifying a security rule that is associated with a query combination comprising the received query and any related previously received queries; and, in advance of processing the received query, applying the security rule to determine whether the user is entitled to retrieve information that would be generated by processing the received query.

According to a second aspect, an embodiment of the present invention provides a program product comprising a data carrier storing thereon instructions which, when executed by a programmable processor, perform the aforementioned computer implemented method.

According to a third aspect, an embodiment of the present invention provides an information retrieval apparatus, comprising: an input to receive a user query intended to retrieve information from one or more information sources; a query history store, storing a record of previously received user queries; a query comparator to compare the received query to the record of previously received user queries, in order to determine whether the received query is related to any previously received queries and to identify a security rule that is associated with a query combination comprising the received query and any related previously received queries; and a detector to apply the security rule, in advance of processing the received query, to determine whether the user is entitled to retrieve information that would be generated by processing the received query.

Other aspects and embodiments will become apparent from the following description and claims.

### Brief Description of the Drawings

Various features and advantages of embodiments of the invention will become apparent from the following description of embodiments of the invention, given by way of example only, with reference to the accompanying drawings, of which:
FIG. 1 is a diagram showing a functional architecture of a data integration system according to embodiments of the present invention;
FIG. 2 is a graphical depiction of an ontology used as a unified view according to an embodiment of the present invention;
FIG. 3 is a representation of an extract of a simple ontology, suitable for use as a unified view according to an embodiment of the present invention;
FIG. 4 is a flow diagram, representing a process for retrieving information according to an embodiment of the present invention; and
FIG. 5 is a diagram showing a functional architecture of the sensitive data detector of FIG. 1.

### Detailed Description

Various embodiments of the present invention will now be described in more detail with reference to the accompanying drawings. It will be appreciated that the invention is not limited in its application to the details of method and the arrangement of components as set forth in the following description or illustrated in the drawings. It will be apparent to a person skilled in the art that additional embodiments of the present invention not detailed in the description are possible and will fall within the scope of the present claims. Accordingly, the following description should not be interpreted as limiting in any way, and the scope of protection is defined solely by the claims appended hereto.

Embodiments of the present invention are aimed at addressing information security challenges that information owners face with the advent of data integration systems, which provide a unified view of information stored across, potentially, many heterogeneous storage systems. Such systems cause additional problems for information owners, because a single query can result in information on a respective queried subject being drawn from plural different information repositories in the system. While, on an individual basis from each repository, the information may not be classed as particularly sensitive, it is sometimes the case that a combination of information from different information sources becomes sensitive, and needs additional controls and restrictions applying to it.

Taking banking as an example, there may be a customer database that holds customer information, such as name, address, telephone number, national insurance number and date of birth for all customers. There may be a separate, account database, containing customer name, bank account number(s) and account details such as balance etc. Someone having access to only one or other of these databases would not be able to use the information to carry out identify theft or bank fraud. However, in a data integration system scenario, it may be possible to enter a customer name and obtain access to a unified view of the customer's information, including all the information from both databases. It will be appreciated that a combination of the information could be used for identity theft and banking fraud.

The banking example provided above is relatively simple, with a unified view providing a highly sensitive combination of data, and it is unlikely in practice that such information could be easily extracted by users who have insufficient access rights. However, even when a complete set of information cannot be obtained in a unified view, sufficient information may still be provided that a fraudster could deduce or extrapolate important, missing elements of information or data, in order to facilitate a malicious intent.

Embodiments of the present invention aim to reduce the likelihood that such sensitive combinations of information can be accessed by users who have insufficient access rights, by employing one or more of the following techniques:
(i) applying rules comprising pattern-based regular expressions to a unified view (comprising, for example, an ontology or a unified schema), whereby the rules are automatically executed whenever an associated user query arises.
(ii) generating and maintaining a history of user queries and access patterns, making it possible to draw inferences on whether combining past and present user queries could synthesise sensitive data.
(iii) applying deep type analyses which allow a system to detect sensitive information hidden in data including unstructured text.

The application of technique i. means that rules processing can be applied only when required (for example, when an associated ontology concept is used in a query) thereby significantly increasing the speed and efficiency of rules processing, compared to applying every rule to each query. This makes it possible to scan information when it is sent to end users or applications. According to an embodiment to be described, in order to make it easy to develop these rules, two types of rules are distinguished. The first are generic security rules, which specify data patterns; the second are domain based security rules.

Generic security rules can be applied in any scenario. For example, a generic security rule may deem that a 16-digit number, which is likely to be a credit card number, is by default sensitive in any data repository. Similar generic security rules may detect social security numbers, e-mail addresses, dates of birth and telephone numbers. In contrast, domain-based security rules tend to be large granularity rules and are devised to detect sensitive information, or combinations of information, within certain contexts, or 'domains'. For example, the name or family address of an individual may be classed as particularly sensitive data if the person is an inmate in a prison, whereas a name and family address may not be sensitive in other contexts, such as in a retail customer database. As will be described, these two kinds of rules can provide a mechanism to de-sensitise sensitive data without losing meaningful data values and help to alert relevant people when highly sensitive information is accessed.

In the context of technique ii, queries may be deemed to be related in various different ways. For example, queries may be deemed to be related because they emanate from the same source (e.g. the same user). Other queries may be deemed to be related despite their originating from different sources. For example, rules may be deemed to be related if they emanate from different sources but within a pre-determined time-frame (such as an hour, 4 hours or a day), and/or have emanated from different but potentially collaborating sources (such as from two people working in the same office or within the same sub IP domain). Other rules would, no doubt, become apparent to the skilled person on reading the present description.

An advantage of generating and maintaining a query history is that past query results do not need to be physically stored to enable information security rules to analyse combined (i.e. past and present) query results. The query history itself is stored in an appropriate database.

With respect to technique iii, deep type analysis can restructure unstructured information, so that it is possible to link detected data structures back to the unified view in order to apply information security rules, as will be described herein.

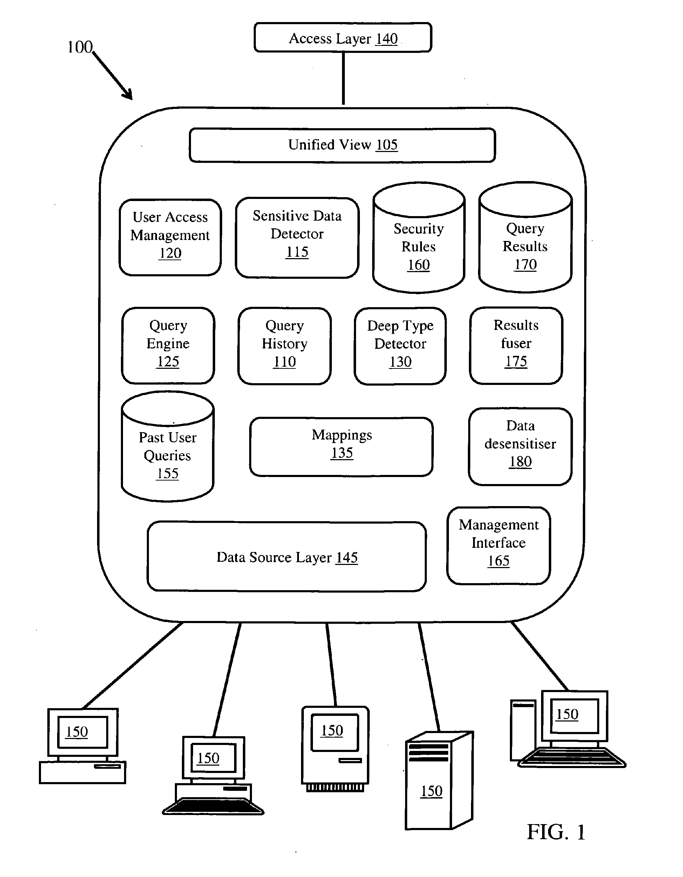

An embodiment of the present invention will now be described with reference to the diagram in FIG. 1. The diagram provides a functional architecture for a data integration system 100 according to the present embodiment. The data integration system 100 is typically embodied as one or more computer programs or software modules executing on a computing platform, for example, operating under a Windows™, UNIX™ or Linux™ operating system. The data integration system 100 comprises a number of functional components, as illustrated in FIG. 1, which relate to elements of the present embodiment. Commonplace functional elements, relating to computing and database management tasks in general are not illustrated and will not be described herein, in order not to obscure important elements of the present embodiment.

According to FIG. 1, the data integration system 100 comprises a unified view function 105, a query history function 110, a sensitive data detector function 115, a user access management function 120, a query engine function 125, a deep type detector function 130, and a mappings function 135. The data integration system 100 includes an access layer 140, through which user queries are issued to the system and results are returned to the user. If the system generates any alerts, they may also be communicated to the user through the access layer 140. A user would typically communicate with the access layer 140 via a remote client (not shown), which may comprise a graphical user interface, which enables users to generate queries using the unified view and view query results, for example, in hypertext. Queries may be issued using an SQL or SPARQL syntax or made simple through clicking associated graphical elements. The access layer 140 may provide a client, to be downloaded and used by users, or it may act as a server function to be manipulated by a standard client, such as a web browser application. The data integration system 100 also includes an information source layer 145, for interacting with the various heterogeneous information sources 150, which store data that is included in the unified view. The information sources 150 can be thought of as data silos, which plug into the data integration system via various APIs, as has already been described.

In addition, the data integration system 100 includes a past user query database 155, which stores a history of past user queries along with meta-data, which can be used to identify related queries. The meta-data may include one or more of: the identity of the user who issued each query, the time and date of the query, the organisation entity or group that the user works in, etc. Also included is a security rules database 160, which contains the rules to be applied by the sensitive data detector 115. Further, the data integration system 100 includes a management interface 165, which is used to manage and maintain the data integration system 100. If security alerts occur, respective indicators are communicated to a system operator via the management interface 165, such that the operator can take appropriate actions to protect the data or investigate malicious access attempts. Finally, the data integration system 100 includes a query results database 170, for receiving and temporarily storing query results that are returned from the information sources 150, a results fuser function 175, which operates to fuse returned information into a single presentation format, and a data desensitiser function 180, to desensitise fused data to reduce the sensitivity thereof, if possible, as will be described.

The unified view 105 provides a model of the data that can be accessed by the system and may, as has been described, be provided by an ontology or a unified schema of known kind. The unified view 105 provides a formal business vocabulary that users of the system will understand and be able to use to form queries. For example, a unified view in a medical environment would in many respects be quite different from a unified view in a banking environment - the former would include a significant medical or clinical aspect to the vocabulary while the latter would have a significant banking or finance aspect to a vocabulary. Both medical and banking unified views would, on the other hand, have an overlapping vocabulary in the context of people: patients and customers respectively. The vocabulary is typically independent of the contents of the underlying information sources 150, because it is designed with the business users in mind, whereas the information sources may have been designed to be accessed by information technology specialists. Therefore, the mappings function 135 is provided to provide the wrappers and converters that link between the vocabulary of the unified view 105 and the contents and any expected query vocabulary of the underlying information sources 150.

The query history function 110 is a comparator, which compares new queries with past queries, in order to determine whether a new query is related in any way to a previously received query. The relationships may be due to queries emanating from a common source, queries emanating from different sources but which are closely related (e.g. in content or context) in some other way, for example having been received within a pre-determined timeframe of one another, or simply queries, which, if combined, would lead to the formation of sensitive combinations of data (irrespective of source or timeframe). Each system provider would be expected to define the relationships to be applied by the query history function 110 in its particular implementation.

The sensitive data detector function 115 determines whether any new query causes a potential threat to information security, based on the various detection techniques that will be described herein.

The user access management function 120 applies known techniques to authenticate users, for example by using passwords, biometrics and/or smart cards. Any user who wishes to use the system first has to be authenticated by the user access management function 120 in a known way. The user access management function 120 also provides information indicating each user's access rights, which are applied to determine whether each user has the authority to access certain kinds of information. In effect, the access rights of a user dictate what degree of sensitivity of information they can access.

The deep type detector function 125 detects whether information that has been recovered in response to a user query contains sensitive information. In particular, the deep type detector function 125 is able to restructure unstructured data - for example text documents or the like - and, with the imbued structure, link the information back to the unified view 105, so that it is possible to apply the associated pattern-based rules to establish a degree of sensitivity for the retrieved information.

The query engine function 125 receives a user query, expressed using the vocabulary of the unified view 105, and decomposes it into sub-queries, using the mappings function 135 to create sub-queries using a vocabulary that is appropriate to the individual information sources 150. After the sub queries are processed, the sub query results from these sub queries are returned and 'fused' (or joined) by the results fuser 175 into a unitary query result, which may comprise structured and/or unstructured information, which can be processed by the deep type detector function 130 before being returned to the user.

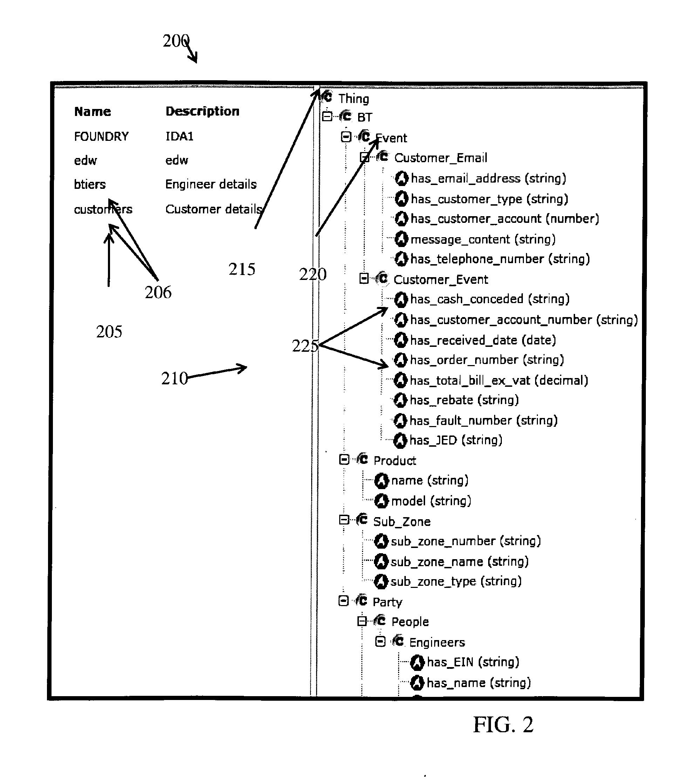

An extract of an exemplary unified view according to an embodiment of the present invention is depicted graphically in FIG. 2. The unified view is presented in a graphical user interface 200, which, in this example, presents an ontology of known kind using a vocabulary that is appropriate for users who work in a telecommunications company. The graphical user interface 200 has two main data areas: a first area 205 on the left side lists the individual information sources 206 that are accessible to the overall data integration system 100. The information sources 206, in this example, are typically independent database systems, which operate on a diverse, distributed and heterogeneous arrangement of computing platforms (not shown). A graphical depiction of the ontology 210 resides on the right side of the interface 200. The ontology comprises a hierarchy of nodes being either concepts 215 or fields 225. Each concept comprises sub-concepts 220 or fields 225 defining the data structure of the concept. The ontology comprises hypertext links, whereby, when a user moves a graphical pointer and 'clicks' on a concept or field, this acts to generate and run a user query defined by the concept and associated fields. For example, if a user clicks on the concept "Customer_Email", a user query is generated including all the fields under "Customer_Email" (i.e. has_email_address, has_customer_type, has_customer_account_message_context, has_telephone_number) and, in return, the data integration system 100 (subject to the user having appropriate information security clearance) retrieves associated information for the user, where the information may have been collected from one or more of the available information sources 150. This kind of graphical unified view is known and will not be described in further detail herein.

As has already been mentioned, it is possible to associate security rules with the unified view in a number of ways, as will now be described.

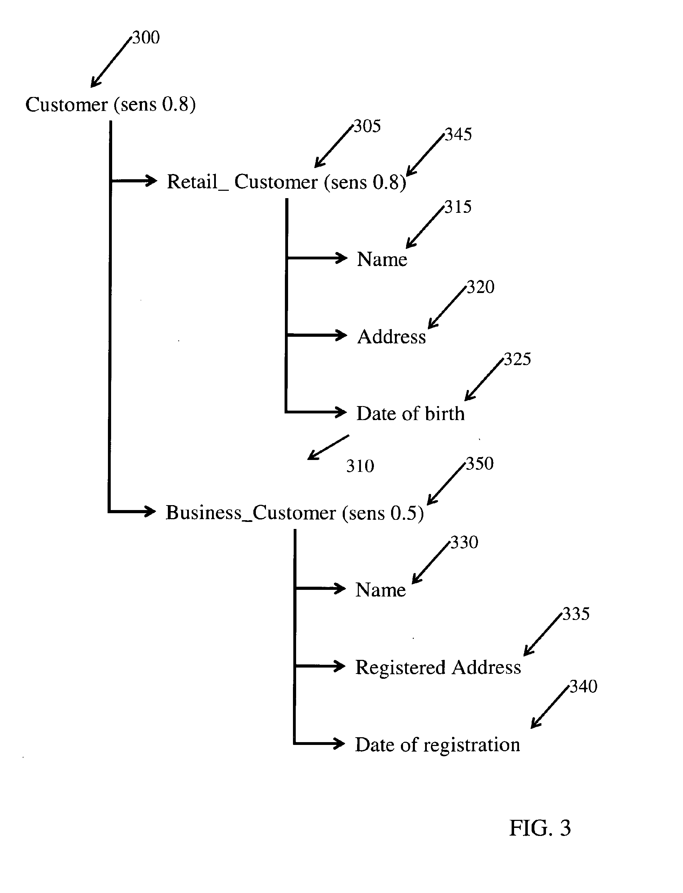

A first kind of rule association is described in relation to technique i. above, wherein pattern-based regular expressions are applied to a unified view, which may be an ontology as illustrated in FIG. 3. In particular, it is possible to apply a rule to a concept (or even to a field), such that when the concept is selected to form a user query, the rule is automatically executed by the sensitive data detector 115. In FIG. 3, the simple ontology extract comprises a generic concept 'Customer' 300 and sub-concepts 'Retail-Customer' 305 (i.e. an individual person) and 'Busines_Customer' 310 (i.e. a business entity), where Retail_Customer 305 has fields: name 315, address 320 and date of birth 325, and Business_Customer 310 has fields: name 330, registered address 335 and date of registration 340.

In this example, domain-based rules associated with the sub-concepts Retail_Customer and Business_Customer might apply a relativity high sensitivity to a query based on Retail_Customer and a relativity low sensitivity to a query based on Business_Customer, according to the rationale that address and date of birth information is sensitive to individuals, but similar information is not as sensitive for businesses. The sensitivities would then be used by the sensitive data detector 115 to establish whether a user issuing a respective query would have sufficient rights to access the retrieved information. If the user does not have sufficient rights to receive the information, the query may either be refused or the resulting information may be de-sensitised before being returned to the user.

A second kind of rule association is described in relation to technique iii. above. While regular databases may have a limited view of 'type', including, for example, 'string', 'number', 'date', etc., according to embodiments of the invention a deep data type (DDT) structure includes additional structured information. For example, a DDT structure might be 'Customer', which is the generic concept illustrated in FIG. 3. Accordingly the DDT structure may be defined by the fields: name, address and date. Then, when a query has been processed and retrieves information, which may be unstructured information, the information can be analysed by the deep type detector 130 to determine whether any DDT structures are present. By way of example, if unstructured information that is returned in response to a user query is analysed and is found to contain the DDT structure 'Customer', an assumption can be made that the data relates to either a retail customer (Retail_Customer) or a business customer (Business_Customer). The sensitive data detector 115 is then able to apply the security rules that are associated with 'Customer' in the ontology. From the information available, however, it might not be possible for the sensitive data detector 115 to distinguish whether the information relates to a retail or to a business customer and, as such, a higher sensitivity, which in this instance is associated with a retail customer, might be applied to the information, in order to err on the side of caution. Based on this, the sensitive data detector 115 operates to determine whether the user who issued the original query has the access rights to view the returned results. In addition, a warning message may be issued, via the management interface 165, to cause an operator to review the information and decide whether to release it to the user: if the DDT structure is found to relate to a retail customer is may not be released if the user has insufficient privileges; if the information relates to a business customer it may be released. In the former instance, the user would receive the information as requested, whereas, in the latter instance, the user might receive a message indicating that at least some of the information that had be generated by the query had been excised from the query results, or de-sensitised, as will be described herein.

It will be appreciated that there are many potential variants of DDT structure, the form of which would vary depending upon the kind of unified view, and the vocabulary, that is in use. In addition, there are many known techniques by which DDTs may be identified within structured or unstructured information. For example, the book edited by Bas Aarts, David Denison, Evelien Keizer and Gergana Popova (Fuzzy Grammar: A Reader by Bas Aarts, David Denision, Evelien Keizer and Gergana Popova, OUP Oxford, ISBN-10: 0199262578, 2004) contains a collection of papers for discovering and applying fuzzy grammars, which are referred to herein as DDTs. Another reference is a paper called: Incremental evolution of fuzzy grammar fragments to enhance instance matching and text mining by Trevor Martin, Yun Shen and Ben Azvine, IEEE T. fuzzy Systems 16(6), 2008. A detailed discussion on DDTs and the like is not provided herein.

In summary, according to embodiments of the invention, security rules used in relation to DDT structures are used for assigning sensitivity levels and detecting access patterns. For each associated security rule, for example, the system may attach a sensitivity level of between 0 and 1. The same deep type could be attached to different concepts in an ontology with different sensitivity levels, because deep types are not context sensitive while security levels are context sensitive. In general, DDT structures are used for dynamically monitoring whether sensitive data is about to leave the data integration system 100. Deep types can be applied to silo information sources as well as to dynamic (i.e. on-the-move) information. However, according to embodiments of the invention, respective security rules are applied by the data integration system (i.e. not by the silos themselves). In some embodiments, a query may be processed even if the user is deemed to have insufficient access rights for the query to be processed, in order that DDT processing can be applied to the query results. In this way, it is possible to establish a degree of severity of a potential security breach, even if there is no intention to reveal the query results to the user, and in order to facilitate a thorough investigation by the system operators.

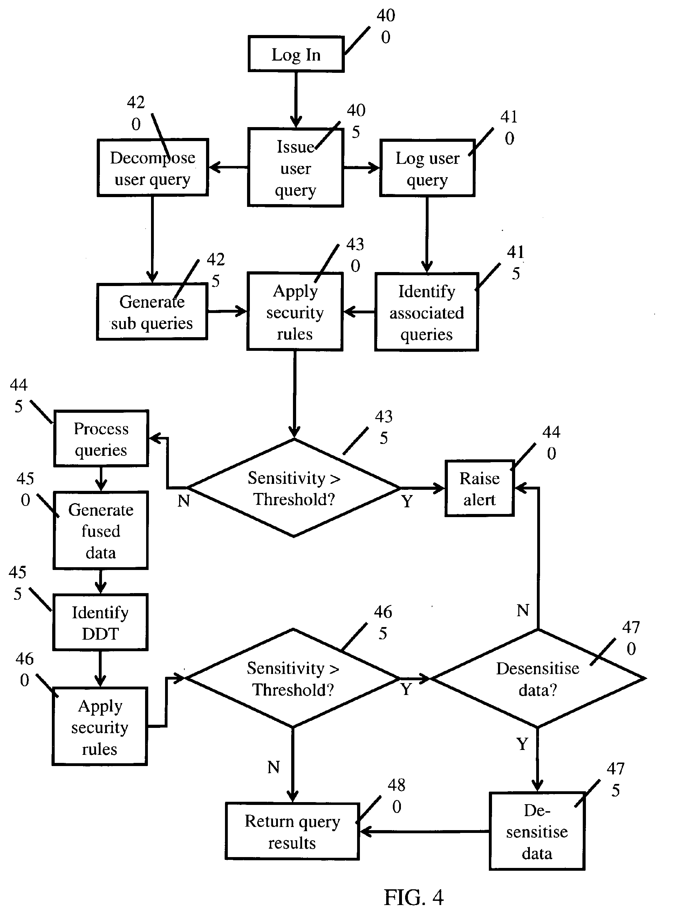

An embodiment of the present invention will now be described with reference to the flow diagram in FIG. 4.

In a first step [400], a user logs into the data integration system 100, in order to gain access to the system and the data is stores. The user access management function 120 controls this step in a known way and associates respective access rights with the user. Next, [step 405] the user issues a query via the access layer 140, by interacting with the unified view 105 in a known way. The process then branches into two parallel operations. In a first branch, the user query is logged by the query history function 110 [step 410] and the query history function 110 identifies whether there are any related, past user queries [step 415]. The result is passed to the sensitive data detector 115. In a second branch, the user query is decomposed into sub-queries [step 420], new sub-queries that are specific to the information sources 150 are formed [step 425] by reference to the mappings 135, and the results are passed to the sensitive data detector 115. Next [step 430], the sensitive data detector 115 applies all relevant security rules to the received queries (including the original query, the combination of the original query with any related historic queries and the new sub-queries) in order to generate an overall sensitivity level. Where different rules present different sensitivity levels, according to the present embodiment, the highest level is deemed to be the resulting level. Further detail of the application of the security rules is described hereinafter.

Next [step 435], the sensitive data detector 115 determines whether the sensitivity level exceeds an acceptable sensitivity threshold. In this step, the sensitivity threshold is determined by the access rights of the user who issued the user query.

If the user does not have sufficient rights to access the information, the sensitive data detector 115 sends a signal [step 440] to the management interface 165, raising an appropriate alert and the process ends. As has been described above, in other embodiments, the query may still be processed in order to facilitate a more thorough investigation.

If the user has sufficient access rights, then the process continues in a next step [445] with the information sources 150 receiving and processing the respective sub-queries, and returning the results to be stored in the query results database 170. From here, fused data is generated by the results fuser 175 [step 450], after which deep data analysis is applied to the fused data [step 455], by the deep type detector 130, in order to identify any DDT structures. The sensitive data detector 115 then applies security rules to the DDT structures and determines a sensitivity level [step 460]. If the determined sensitivity level is higher than the previously-determined threshold level for the user [step 465], then a determination is made as to whether the data can be desensitised [step 470].

Data desensitisation can take many different forms, depending on what elements of the information are sensitive. For example, if it is deemed that a combination of home address and date of birth for an individual is too sensitive for a user to have access to, it would be possible to excise the information entirely, thereby rendering the remainder of the information less sensitive and in a form that can be presented to the user. Alternatively, an address may be desensitised by removing all but the post code or zip code. Such a desensitisation would render the information less sensitive, while maintaining an element of useful address information. This technique can be applied if a medical researcher is trying to determine patterns in the spread of a contagious disease, for example, in which a general neighbourhood indicator (post or zip code) would be sufficient to facilitate meaningful research. Another kind of data desensitisation would be to replace a date of birth with a month and year of birth. Again, this would facilitate research, based on people's approximate birth date, while removing the opportunity to use date of birth information by identity fraudsters.

Data desensitisation rules, according to embodiments of the present invention, form a part of the rules that are associated with the unified view. For example, with reference to FIG. 3, a rule associated with Retail_Customer might state that the sensitivity level for raw retail customer information is relatively high, whereas a desensitised variant of the data (e.g. replacing the address and data of birth information) has a relatively lower sensitivity level. The operation of data fusing combined with DDT detection, thus, facilitates a powerful means by which otherwise highly sensitive data may be desensitised and returned to a user in a less sensitive format.

Of course, if information is sensitive for other reasons, for example the information relates to personal financial data, and changing any of the data renders the entire results dataset useless, there is no point applying data desensitisation. Therefore, according to embodiments of the present invention, data can only be desensitised if there is a desensitisation rule associated with the ontology concept (or equivalent element of the unified view).

If it is not possible to desensitise the information, an alert is raised by issuing a signal to the management interface [step 440].

If, however, there are no identified DDT structures that increase the sensitivity level of the query results, or information that has an increased sensitivity level as a result of identified DDT structures can be desensitised [step 475], then the fused query results (as modified if necessary), are returned to the user [step 480]. If any modification of the results to desensitise the information has taken place, a message is optionally communicated to the user with the query results so that the user knows that the data is, in effect, incomplete or merely representative of the actual data.

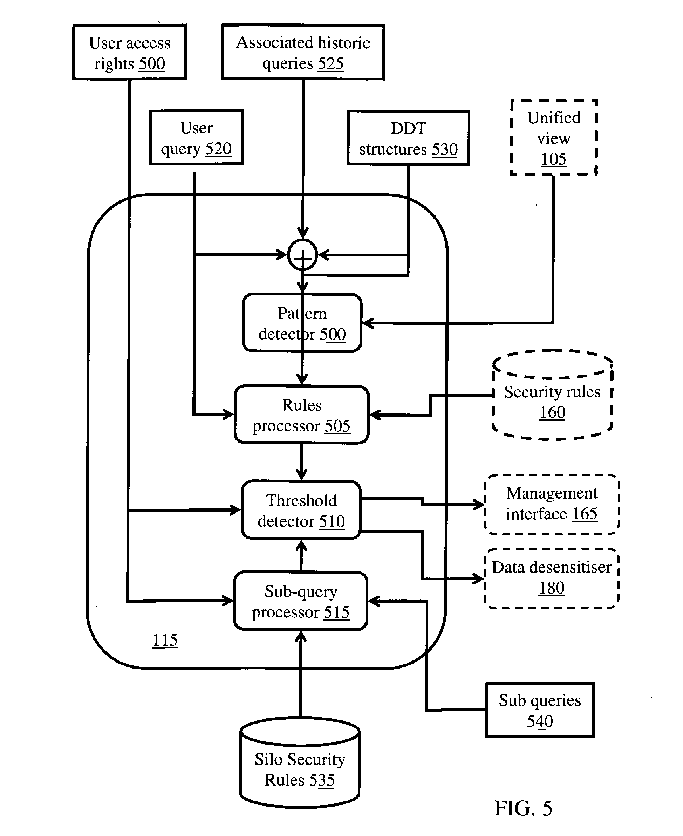

A sensitive data detector 115 and its associated components, according to an embodiment of the present invention, will now be described in more detail with reference to the architecture illustrated in FIG. 5.

The sensitive data detector 115 comprises a pattern detector 500, a rules processor 505, a threshold detector 510 and a sub-query processor 515.

The pattern detector 500 is adapted to identify combinations of queries and DDT structures that map onto elements of the unified view 105. For example, the pattern detector 500 might map queries and DDT structures onto concepts in an ontology 210. A combination may comprise a current user query 520 and any related historic queries 525, which are related with the present user query 520, as determined by the query history function 110. Alternatively, or in addition, a combination may be one or more identified DDT structures 530, as determined by the deep type detector 130, and historic queries 525 and/or the present user query 520. While a single user query 520 and a detected DDT structure 530 may each have an associated sensitivity level, which may be mapped onto the unified view 105, the pattern detector 500 identifies when a combination results in a mapping onto the unified view 105 that may potentially be more sensitive. According to the present embodiment, the pattern detector does not have to consider mappings of current user queries onto the unified view, because the mapping already exists by virtue of the fact that the unified view 105 was used to generate the query. For example, the user may have generated the query by selecting a concept 220 from an ontology 210 - then the query by definition maps onto the ontology and pattern matching is therefore not required.

The different kinds of pattern matching typically occur at different times in a query process. For example, a pattern matching processes applied to a combination of a user query 520 and related historic queries 525 would occur relatively early in the process, for example at step 430 in the flow chart in FIG. 4. In contrast, pattern matching relating to an identified DDT structure 530, or a combination of a DDT structure 530 with a present query 520, would typically happen later in the process, after query results have been returned and analysed by the deep detector 130, for example at step 460 in the flow chat in FIG. 4.

The output of the pattern detector 500 comprises an indication of whether, and where, a combination maps onto the unified view 105. The indication forms an input of the rules processor 505.

The rules processor 505 is adapted to apply information security rules 160 to user queries 520, identified DDT structures 530 and combinations that have been identified by the pattern detector 500.

According to the present embodiment, the information security rules 160 have a direct mapping onto the unified view 105. In a simple example, the rules may simply apply a sensitivity level (to a query, DDT or identified combination), taken from the unified view 105. For example, as shown in FIG. 3, each concept in the ontology has an associated sensitivity level 345, 350, which is applied to any query, DDT or combination that maps onto the respective ontology concept.

In addition, the rules processor 505 determines an overall sensitivity level when multiple sensitivity levels arise. For example, a first sensitivity level may be associated with a user query 520, a second sensitivity level may be associated with a combination of a user query 520 and past, related user queries 525, a third sensitivity level may be associated with an identified DDT structure and a fourth sensitivity level may be associated with a combination of past, related user queries and an identified DDT structure. In this example, the rules processor 505 could determine that the overall sensitivity level takes the value of the highest of the four sensitivity levels. However, in some instances, such a simple approach may not be appropriate, and it may be preferred to increase the overall sensitivity level to higher than any of the individual sensitivity levels, in order to reflect the increased sensitivity due to the amalgamation of the information that would be returned by the query. For example, any query concerning a company's commercial customer data should be treated as confidential. If taken together with historical queries, the current query could allow deduction of the customer's buying behaviours, and then the sensitivity level should be higher than each of the individual sensitivity levels. In other words, if, with all queries taken together, the current query allows deduction of a customer's buying behaviours and personal details, the sensitivity level should be increased to a level to prevent users with insufficient access rights from accessing the information.

The output of the rules processor 505 is a sensitivity level, which is communicated to the threshold detector 510, the operation of which will be described hereinafter.

Another input to the threshold detector 510 emanates from the sub-query processor 515. The sub-query processor 515 establishes whether the user has the rights to issue a particular set of sub-queries 540 to, and receive query results from, each of the individual information sources 150. Access rules for the individual information sources 150 are collectively represented as silo security rules 535 in FIG. 5. The silo security rules 535 may emulate traditional security rules of the information sources 150, and the sub-query processor 515 may act as an information security proxy for each the information sources 150. In practice, each information source 150 may still apply its own access security rules (in a known way), or some or all of the information sources 150 may delegate access control to the data integration system 100. In any event, the sub-query processor 515 generates a sensitivity level, based on the results of the application of the silo security rules 535 to the sub queries 540 and the access rights of the user who has issued the query 520.

The threshold detector 510 compares the sensitivity level with user access rights 535, which are provided by the user access management process 120, to produce an output indicating whether or not (1) the user has the rights to issue a query [e.g. step 435] or (2) after a query has legitimately been issued, the user has the rights to receive the information that has been returned in response to the issued query [e.g. step 465].

In relation to the user not having the right to issue a query, the output of the threshold detector 510 is communicated to the management interface 165. In relation to the user having the right to issue the query but not having the right to receive the retrieved information, the output of the threshold detector 510 is communicated to the data desensitiser 180 for onward processing, to establish if the information can be desensitised and returned to the user.

The above embodiments are to be understood as illustrative examples of the invention. Further embodiments of the invention are envisaged. For example, while the present embodiments have been described in relation to software functions operating on a computing platform, some or each of the processing elements, particularly those illustrated in FIGs. 2 and 5, may be embodied in firmware that is executable by programmable processors or in hardware as dedicated ASICs. In any event, it is emphasised that embodiments of the present invention are in no way limited to any particular software, firmware or hardware implementation. In addition, it is emphasised that, while embodiments of the present invention have been described in the context of a data integration system, there is no reason in principle or practice why the present teachings could not be applied to any other kind of data or information retrieval system, irrespective of whether the system provides access to a single or to plural data sources. It is to be understood that any feature described in relation to any one embodiment may be used alone, or, if the context permits, in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer implemented information retrieval method, comprising:
receiving a user query intended to retrieve information from one or more information sources;
comparing the received query to a stored query history of previously received queries, in order to determine whether the received query is related to any previously received queries;
identifying a security rule that is associated with a query combination comprising the received query and any related previously received queries; and
in advance of processing the received query, applying the security rule to determine whether the user is entitled to retrieve information that would be generated by processing the received query.

2. A computer implemented method according to claim 1, comprising a pattern matching process, to match the query combination with one of a number of pre-determined queries.

3. A computer implemented method according to claim 2, wherein each pre-determined query has an associated security rule.

4. A computer implemented method according to any one of the preceding claims, including processing the received query to retrieve information from one or more data sources.

5. A computer implemented method according to claim 4, including generating a sub query for the or each information source to which the received query applies, and applying the sub queries to the respective information sources in order to retrieve the information.

6. A computer implemented method according to claim 5, including joining the information from plural information sources into a fused body of information.

7. A computer implemented method according to any claim 6, including associating a sensitivity level with the fused body of information.

8. A computer implemented method according to claim 7, wherein the sensitivity level is influenced by a detected presence within the fused body of information of a pre-determined structured data type.

9. A computer implemented method according to claim 8, in which the fused body of information comprises unstructured information, and the method comprises re-structuring the unstructured information and identifying any pre-determined structured data types.

10. A computer implemented method according to any one of claims 7 to 9, wherein, if the sensitivity level exceeds a threshold, information desensitisation is performed, in order to reduce the sensitivity level to below the threshold.

11. A computer implemented method according to claim 10, wherein information desensitisation comprises replacing sensitive elements of information with dummy information.

12. A computer implemented method according to any one of the preceding claims, wherein the received query is generated by user interactions with a unified view, which defines a vocabulary for accessing information stored in a plurality of individual information sources.

13. A computer implemented method according to claim 12, wherein the unified view comprises an ontology of concepts, wherein each of a number of the concepts represents a user selectable query.

14. A computer implemented method according to claim 12 or claim 13, wherein queries that emanate from the unified view each have an associated security rule.

15. A computer implemented method according to any one of the preceding claims, wherein a received query is related with a previously received query if the source of the query is the same.

16. A computer implemented method according to any one of claims 1 to 14, wherein a received query is related with a previously received query if the two queries arise within a pre-determined period of time.

17. A program product comprising a data carrier storing thereon instructions that, when processed by a programmable processor, perform the computer implemented method of any one of the preceding claims.

18. An information retrieval apparatus, comprising:
an input to receive a user query intended to retrieve information from one or
more information sources;
a query history store, storing a record of previously received user queries;
a query comparator to compare the received query to the record of previously received user queries, in order to determine whether the received query is related to any previously received queries and to identify a security rule that is associated with a query combination comprising the received query and any related previously received queries; and
a detector to apply the security rule, in advance of processing the received query, to determine whether the user is entitled to retrieve information that would be generated by processing the received query.

19. A data integration system comprising an information retrieval apparatus according to claim 18.

20. A data integration system adapted to operate according to the method of any one of claims 1 to 16.
